# EUROPEAN PATENT APPLICATION

(11) **EP 3 650 418 A1**
(43) Date of publication of application: **13.05.2020**
(21) Application number: 19020617.7
(22) Date of filing: 05.11.2019
(51) Int. Cl.: C04B 28/06, C04B 28/10, C04B 28/14

(54) **PLASTER FOR THE CONSOLIDATION OF MASONRY WALLS AND METHOD OF APPLICATION OF THE SAME**

(30) Priority: 09.11.2018 IT 201800010198
(71) Applicant: Tecnologia e Ricerca Italiana S.r.L., 25124 Brescia (IT)
(72) Inventor: Sacrato, Stefano, 25124 Brescia (IT); Plizzari, Giovanni, 25124 Brescia (IT)
(74) Representative: Lecce, Giovanni

(57) **Abstract**

A plaster for the consolidation of masonry walls, comprising an aerial and hydraulic binder composition which includes at least one aggregated component in a binding matrix, at least one grip retardant additive, short organic fibres and high strength fibres. The binding matrix comprises a primary binding element, a secondary binding element and at least nanocomposite material. The aggregated component comprises at least one globular structure material and at least one acicular structure material.

## Description

The present invention relates to a plaster for the consolidation of masonry walls.

The invention further relates to a method for applying a plaster to masonry walls for the consolidation of the walls themselves.

With the term "masonry" is meant to indicate a wall structure made up of different elements - such as stone, brick, raw earth - taken separately or in combination and piled on top of one another with or without the interposition of a cementing material.

With the expression "high resistance fibres" is meant to indicate fibres having higher resistance to tensile stress to 70 MPa.

The buildings built on grounds which are subject to stresses of a vibratory type (generated for example by a seismic event, by the presence of a railway line in the vicinity or by industrial plants operating processings which involve considerable stresses propagating in the ground), or that have undergone landslips, yielding located or unevennesses, may have lesions in time to masonry parts and, unless such lesions are not such as to make the building disrupted (namely having excessive lesions e.g. walls partially collapsed), require consolidation operations and/or recovery of masonry parts.

Further, also the buildings present in territories to seismic risk, in particular those built without measures of a structural type which allow to cope with stresses due to an earthquake, often have the need to reinforce the structure previously existing, so as to previously increase the safety of buildings or also to operate an actual recovery, if have been damaged by shocks undergone previously. Still more in particular, the buildings exhibiting masonry walls are more subject to damage due to vibratory stresses since they have a very low deformation capacity and have the drawback of a limited resistance to shearing and bending stresses.

In this context, consolidation techniques of walls of buildings damaged generally provide for the application of reinforcing elements both in the inside and on the outside of the walls in such a way as to obtain a reinforcing structure which is stressed in place of the wall contained in it.

Possible consolidation methods provide to insert connection elements made of metallic material or in the fiber, which pass through the thickness of the wall to be consolidated and whose terminals, present on the opposite surfaces of the wall, are then incorporated into a coating material to be applied to the walls damaged. Such a coating material is to be applied on both the opposite surfaces of the wall to be consolidated and

may further contain reinforcing elements form of network or fabric, made with fibres of different materials such as steel, arachnid, basalt, carbon, PBO, glass etc.

The Chinese patent CN104261780 discloses a plaster for the consolidation of masonry walls comprising an aerial binder, an hydraulic binder and polypropylene reinforcement fibres.

In the international application WO2015/118372 a method is disclosed for reinforcing a building with masonry walls by applying connectors and a plaster layer on the walls themselves.

Such solutions however, while providing an improvement of the resistance of the building object of the intervention, entail some drawbacks: in the first place, it is necessary an intervention of the invasive type on the body of the wall involved in the procedure since it is necessary to insert junction elements which traverse the entire thickness of the wall itself. Moreover, the application of the reinforcement layer containing nets or fabrics is carried out on both the opposite surfaces of the wall, with a consequent high waste of material and time of application. The thicknesses of the reinforcing layers used and the consequent weights applied to the structure, to the walls and to the building, make often necessary to reinforce the foundations because of a localized increase of the loads.

It is an object of the present invention to overcome the drawbacks of the known state of the art.

In particular, it is an object of the present invention to provide a plaster for the consolidation of masonry walls, that allows to improve the characteristics of structural strength of the walls to which it is applied as well as of the building structure comprising the walls that have been the subject of consolidation.

Further object of the present invention is that of providing a plaster which is simple to apply and which allows a process of consolidation of existing walls such as to be easily and economically realized.

These and other objects of the present invention are achieved by means of a plaster and a method incorporating the features of the annexed claims, which form an integral part of the present description.

The present invention , in its first aspect, relates to a plaster according to claim 1.

Preferably the primary binding element comprises an aluminous sulphur cement.

Preferably the material having a globular structure consists of quartz or silicates or aluminates and said material having an acicular structure consists of natural or synthetic silicates, carbides or aluminates or carbonates.

Preferably the secondary binding element comprises lime or plaster.

Preferably the organic short fibres have a length lower than 100 mm and a diameter, also equivalent, between 0.001 mm and 5 mm.

Preferably the high resistance fibres have a length greater than 2 mm and less than 100 mm, and a diameter, also equivalent, comprised between 0.005 mm and 5 mm.

In a preferred embodiment the composition having an aerial and hydraulic binder comprises an acicular structure material in a percentage by mass ranging between 30% and 75 %.

In a second aspect the present invention relates to a method for the consolidation of masonry walls according to claim 9.

In a preferred embodiment, the plaster layer has a thickness of between 5 mm and 80 mm.

Preferably the holes are distributed on the first surface of the wall in a substantially uniform way with a density of between 2 holes/m2 and 12 holes/m2.

The invention will be described herein below with reference to the attached drawings which represent a preferred embodiment, illustrated by way of a not limiting example in which:
- Figure 1 shows in a schematic way a masonry wall to be consolidated;
- Figure 2 shows a first step in a method for the consolidation of the wall according to Fig. 1, in accordance with the present invention;
- Figure 3 shows a second step of the method for consolidation of the wall according to Fig. 1, according to the present invention;
- and Figure 4 shows the wall of Fig. 1 at the end of the method of consolidation,
according to the present invention.

While the invention is susceptible to various modifications and alternative constructions, some preferred embodiments are shown in the drawings and will be described below in detail. It is to be understood, however, that there is no intention to limit the invention to the specific embodiment illustrated here, but, on the contrary, the invention is intended to cover all modifications, the alternative and/or equivalent embodiments that fall within the scope of the invention as defined in the claims. The use of "includes" means "includes, but not limited to", unless otherwise indicated.

With reference to the accompanying figures, the numeral 1 denotes in its entirety a masonry wall to be consolidated, according to the present invention.

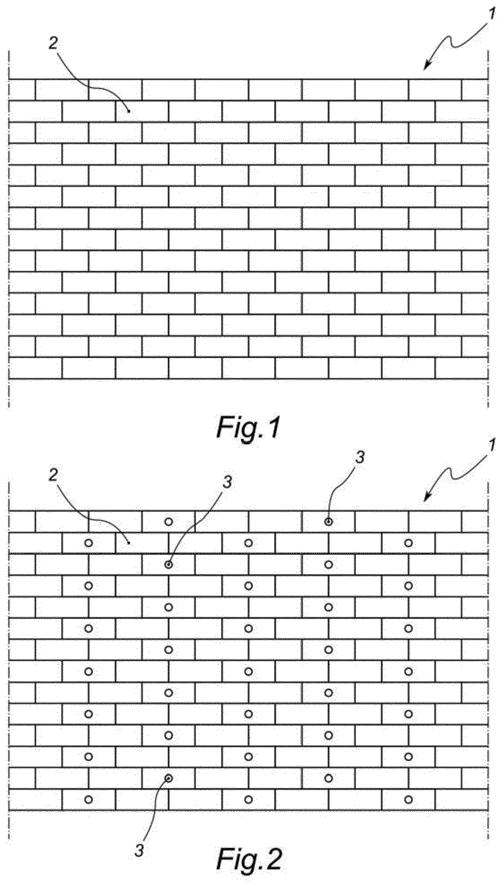

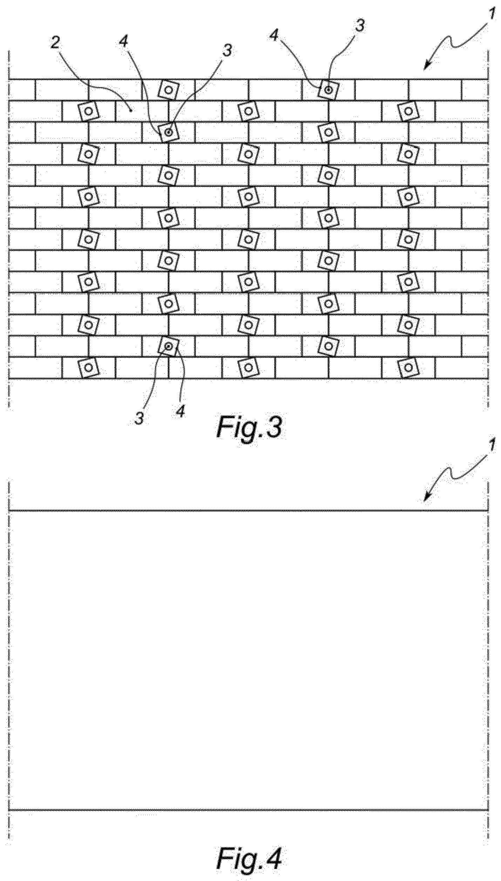

In a possible preferred embodiment, as shown in Figures 2 to 4, the wall 1 has two opposite surfaces 2, in which only one is visible in the figures.

In accordance with the method of the present invention, the surface 2 of the wall 1 is prepared by proceeding with the initial removal of any layers of material present on the masonry wall of said surface 2, such as for example coatings, plasters, protective and/or decorative elements etc. In this way it is possible to create a base consisting of only masonry, for the subsequent application of the plaster according to the present invention, allowing a direct contact between plaster and masonry, and thereby improving the adhesion between said two elements.

After the preparation of the surface 2, holes 3 are made in the wall 1 at a plurality of positions on said surface 2.

Preferably such holes 3 are not through holes in order to preserve the structure of the wall 1 in which there are provided and to avoid any possible passage of humidity between the opposite surfaces 2 of the wall.

Preferably said holes 3 are distributed on the surface 2 in a substantially uniform way with a density of between 2 holes/m2 and 12 holes/m2. Preferably such holes 3 have a diameter of less than 50 mm and more than 3 mm and a depth of between 10 mm and 250 mm.

In each of the holes 3 there are then inserted and fixed integrally with the wall (for example by interference or sticking) some anchorage elements 4 which have a rod having a diameter ranging between 2 mm and 48 mm.

Preferably the anchoring elements are constituted by screws or anchors or pins or bars. In a possible and preferred embodiment the anchorage elements 4 have a widened head which remains outside the wall 1.

On the surface 2 of the wall 1 it is finally applied a layer of plaster, the composition of which is the object of the present invention, up to completely cover said anchorage elements 4.

According to a preferred embodiment the plaster layer has a thickness of between 5 mm and 80 mm.

The plaster used to consolidate the masonry wall 1 according to the present invention comprises an aerial and hydraulic binding composition that includes at least an aggregated component in a binder matrix. The elements that make up the plaster are not visible in the figures and will be described in detail below.

In particular, the binder matrix of the plaster element comprises a primary binder, a secondary binding element and at least one nanocomposite material. Preferably the primary binding element comprises an aluminous sulphur cement and the secondary binding member comprises lime or plaster. Preferably the secondary binding element is formed by calcium silicate hydrate.

The plaster further comprises at least a grip retarding additive that advantageously allows to avoid a premature hardening of the compound, during the hydration step.

The aggregate component of the plaster comprises at least one globular structure material and at least one acicular structure material. In a preferred embodiment the globular structure material consists of quartz or silicates or aluminates.

The acicular structure material can be constituted by an element selected from natural or synthetic silicates, carbides or aluminates or carbonates.

In a preferred embodiment the said aggregated component of the plaster comprises a structure material acicular in a percentage by mass ranging between 30% and 75 %. In this way, it is advantageously produced an increase of the resistance to compression and bending of the plaster, in particular an improvement in the performance of the material in a previous step (compression)and subsequent (bending)to a primer of crack (due to a vibratory stress of the wall). By virtue of the presence of said element, according to this method it is also increased the performance of compression resistance as well as a traction of the plaster thus obtained.

The plaster further comprises organic short fibres which allow to limit the shrinkage phenomenon of a raw state. The presence of these fibres also improves the behavior of the plaster during the laying on the wall to be consolidated since it reduces the running of the material.

In particular, the organic short fibres have a length lower than 100 mm and a diameter, also equivalent, between 0.001mm and 5 mm.

The plaster further comprises high resistance fibres which allow to improve the mechanical performance of resistance to stresses of the plaster itself.

Preferably the high resistance fibres have a length greater than 2 mm and less than 100 mm, and a diameter, also equivalent, comprised between 0.005 mm and 5 mm.

The plaster further comprises a nanocomposite material that interacts with both the primary and secondary binder, during the hydration phase of the compound, increasing the mechanical characteristics of the same.

Preferably the nanocomposite material is selected between nano inorganic compounds.

Advantageously, thanks to the particular combination of the elements described above to provide the plaster, the latter has a low power of shrinkage, or less than 2800 microstrain content to 180 days, considerably limiting the risk of delamination between plaster and the surface to which the latter has been applied.

The plaster obtained according to the present invention allows to considerably increase the structural resistance of the walls to which it is applied, without affecting on the structure of the building, since the foundations of the same are not affected by the intervention and the weight of the plaster for consolidation is slightly higher (from 5% to 15% more) with respect to the weight of a generic plaster for walls, which does not have specific characteristics of resistance.

Although the invention has been described above with particular reference to some of its preferred embodiments, given by way of non-limiting example, numerous modifications and variants will be clear to a person skilled in the art in the light of the above description. Thus the present invention is meant to include all the changes and variants falling within the protective scope of the following claims.

## Claims

1. Plaster for consolidating masonry walls (1), comprising an aerial and hydraulic binder composition which includes at least one aggregated component in a binding matrix, at least one grip retardant additive, short organic fibres and high strength fibres in which:
- said binding matrix comprises a primary binding element, a secondary binding element and at least one nanocomposite material;
- said aggregate component comprises at least one globular structure material and at least one acicular structure material;
- said primary binding element comprises an aluminous sulphur cement.

2. The plaster according to claim 1, wherein said globular structure material consists of quartz or silicates or aluminates and said acicular structure material consists of silicates, natural or synthetic, carbides or aluminates or carbonates according to a percentage by mass ranging between 30% and 75%.

3. The plaster according to claim 1, wherein said secondary binding element comprises lime or plaster.

4. The plaster according to claim 1, wherein said short organic fibres have a length of less than 100 mm and a diameter, also equivalent, of between 0.001mm and 5 mm.

5. The plaster according to claim 1, wherein said high strength fibres have a resistance to tensile stress higher than 70 MPa, have a length greater than 2 mm and less than 100 mm and a diameter, also equivalent, between 0.005 mm and 5 mm.

6. The plaster according to claim 1, wherein said nanocomposite material is an inorganic nano compound.

7. The plaster according to claim 1, wherein said aggregate component comprises acicular structure material according to a mass percentage of between 30% and 75%.

8. Method for consolidating masonry walls (1) comprising:
- preparing a surface (2) of a wall (1) removing possible layers of material present on the masonry of said surface (2);
- forming a plurality of non-through holes (3) in the wall (1) at said surface (2);
- inserting at least one anchor element (4) in each of said holes (3);
- applying a layer of plaster to said at least one surface (2) of the wall (1), until said anchor elements (4) are covered;
wherein said plaster is made according to claim 1.

9. The method according to the previous claim, wherein said layer of plaster has a thickness of between 5 mm and 80 mm.

10. The method according to claim 9 or 10, wherein the holes (3) are distributed on said surface (2) of the wall (1) in a substantially uniform way, with a density of between 2 holes /m² and 12 holes /m².
